# EUROPEAN PATENT APPLICATION

(11) **EP 3 179 411 A1**
(43) Date of publication of application: **14.06.2017**
(21) Application number: 15306949.7
(22) Date of filing: 07.12.2015
(51) Int. Cl.: G06K 15/00, H04N 1/32, B41M 3/14, G03G 21/04, G11B 20/00, G06T 1/00

(54) **METHOD FOR PRINTING AN IMAGE BY MEANS OF A LASER PRINTING MACHINE**

(71) Applicant: GEMALTO SA, 92190 Meudon (FR)
(72) Inventor: LESUR, Jean-Luc, 92190 Meudon (FR)
(74) Representative: Cassagne, Philippe M.J.

(57) **Abstract**

The present invention relates to a method (MTH) for printing an image (I), said image (I) forming a matrix (Mx) of pixels (pi), wherein said method (MTH) comprises:
- the printing by means of a printing machine (LM) of at least one predetermined pattern (P), said predetermined pattern (P) forming a sub-matrix (SMx) of said matrix (Mx) and comprising at least one pixel (Pi) which is shifted from a targeted printing position (P0) according to an offset (Off).

## Description

### TECHNICAL FIELD

The present invention relates to a method for printing an image, said image forming a matrix of pixels.

Such method may be used in a non-limitative example within the domain of smart card production machines.

### BACKGROUND OF THE INVENTION

In the domain of smart cards production, product security levels request to trace the origin of said smart card. It means that the production machine, such as a laser printing machine, which has produced such smart card is to be traced. For this purpose, a smart card comprises a reference number which permits to retrieve the associated production machine's reference from a database, said database comprising the smart card's reference number and the associated production machine's reference.

One problem of this prior art is that although it guarantees the origin of the production of the smart card, it doesn't guarantees that the data on the smart card, such as a picture, or a text, are authentic.

### SUMMARY OF THE INVENTION

It is an object of the invention to provide a method for printing an image, said image forming a matrix of pixels, which permits to identify the production machine and also to identify if the data of said image have been illegally modified.

To this end, there is provided a method for printing an image, said image forming a matrix of pixels, wherein said method comprises:
- the printing by means of a printing machine of at least one predetermined pattern, said predetermined pattern forming a sub-matrix of said matrix and comprising at least one pixel which is shifted from a targeted printing position according to an offset.

As we will see in further details, the predetermined pattern permits to define a unique signature relative to the printing machine. The traceability of said printing machine is therefore possible. Moreover, as the predetermined pattern is part of the printed image, it permits to tag said image with said signature so that said image may not be copied by another printing machine. Said image is therefore secure.

According to non-limitative embodiments of the invention, the method in accordance with the invention further comprises the following characteristics.

In a non-limitative embodiment, the predetermined pattern comprises at least one pixel which is printed according to a targeted printing position.

In a non-limitative embodiment, said method further comprises:
- the printing by means of said printing machine of the other sub-matrix of said matrix according to targeted printing positions of said other sub-matrix' pixels.

In a non-limitative embodiment, said predetermined pattern is specific to said printing machine.

In a non-limitative embodiment, the offset is determined according to an image resolution.

In a non-limitative embodiment, said method comprises the printing of a plurality of said predetermined pattern in said matrix.

In a non-limitative embodiment, the predetermined pattern comprises a plurality of pixels which are shifted according to a same offset or different offsets.

In a non-limitative embodiment, the printing of said plurality of pixels is performed according to a predetermined order.

In a non-limitative embodiment, said method further comprises the generation by means of said machine of at least one reference point in said at least one predetermined pattern.

In a non-limitative embodiment, said reference point is non-printed.

In a non-limitative embodiment, said method further comprises the printing of an encoded character in at least one sub-matrix of said matrix, said encoded character being formed by at least one predetermined pixel with a predetermined color.

In a non-limitative embodiment, a plurality of encoded characters is printed, one per sub-matrix, said plurality of encoded characters forming a printed encoded text corresponding to a printed non-encoded text in said image.

In a non-limitative embodiment, said printing machine is a laser printing machine.

In a non-limitative embodiment, the printing of said image is performed on an electronic device which is a smart card.

In addition, there is provided a printing machine for printing an image, said image forming a matrix of pixels, wherein said printing machine comprises a galvanometric-head adapted to print at least one predetermined pattern, said predetermined pattern forming a sub-matrix of said matrix and comprising at least one pixel which is shifted from a targeted printing position according to an offset.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates an organization chart of the method, according to a non-limitative embodiment of the invention, for printing an image, said image forming a matrix of pixels;
- Fig. 2 illustrates schematically an image which will be printed by means of said method of Fig. 1, said image being divided in a plurality of sub-matrix;
- Fig. 3 illustrates a predetermined pattern which is printed by means of said method of Fig. 1, said predetermined pattern forming at least one sub-matrix of the image of Fig. 2 in a non-limitative embodiment;
- Fig. 4 illustrates a sub-matrix comprising a plurality of reference points which are generated by the method of Fig. 1 according to a non-limitative embodiment, and a matrix comprising a plurality of said sub-matrix;
- Fig. 5 illustrates an encoding map of characters performed by said method of Fig. 1 according to a non-limitative embodiment;
- Fig. 6 illustrates a matrix with a text encoded with some of the encoded characters of Fig. 5; and
- Fig. 7 illustrates schematically a non-limitative embodiment of a laser printing machine which is adapted to cooperate with a scanner and which is adapted to carry out the method of Fig. 1.

### DESCRIPTION OF EMBODIMENTS OF THE INVENTION

In the following description, well-known functions or constructions by the man skilled in the art are not described in detail since they would obscure the invention in unnecessary detail.

The present invention relates to a method MTH for printing an image, said image forming a matrix of pixels.

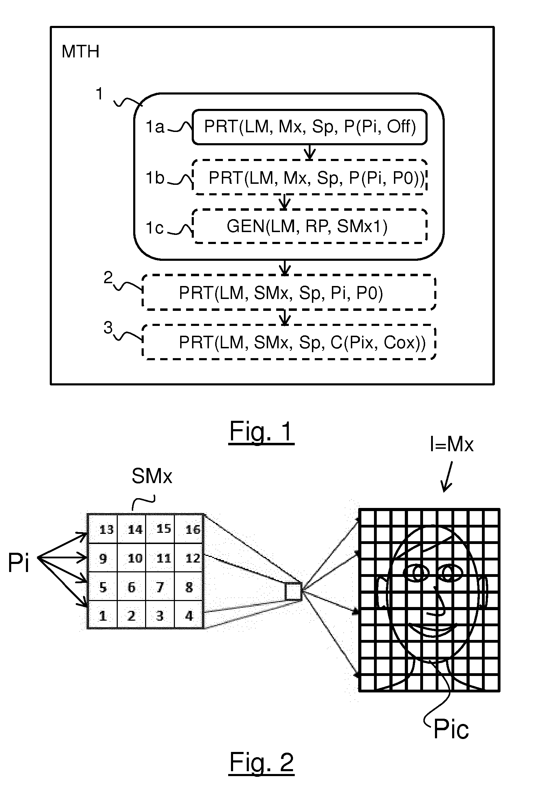

Said method MTH is illustrated in Fig. 1.

The method MTH comprises:
- the printing by means of a printing machine LM of at least one predetermined pattern P, said predetermined pattern P forming a sub-matrix SMx of said matrix Mx and comprising at least one pixel Pi which is shifted from a targeted printing position P0 according to an offset Off (step illustrated in Fig. 1 PRT(LM, Mx, Sp, P(Pi, Off)).

In a non-limitative embodiment, the printing machine LM is a laser printing machine. This laser printing machine is taken as a non limitative example in the following description.

Hence, in a non-limitative embodiment, the matrix Mx is divided in a plurality of sub-matrix SMx.

In a non-limitative embodiment, the predetermined pattern P comprises a plurality of pixels Pi which are shifted according to a same offset Off or different offsets Off.

In a first non-limitative variant, all the pixels Pi of said sub-matrix SMx are shifted according to an offset Off.

In a second non-limitative variant, the predetermined pattern P comprises at least one pixel Pi which is printed according to a targeted printing position P0. That is to say, there is at least one pixel Pi which is not shifted. In this case in a non-limitative embodiment, the method MTH further comprises the printing by means of said laser printing machine LM of the other pixels of said predetermined pattern P according to targeted printing positions P0 (step illustrated in Fig. 1 PRT(LM, Mx, Sp, P(Pi, P0)).

In a non-limitative embodiment, said method MTH comprises the printing of a plurality of said predetermined pattern P in said matrix Mx.

In a first non-limitative variant, the plurality of said predetermined pattern P formed all the sub-matrix SMx of said matrix Mx.

In a second non-limitative variant, there are some sub-matrix SMx which don't form a predetermined pattern P. In this case, the method MTH further comprises:
- the printing by means of said laser printing machine LM of the other sub-matrix SMx of said matrix Mx according to targeted printing positions P0 of said other sub-matrix' pixels Pi (step illustrated in Fig. 1 PRT(LM, SMx, Sp, Pi, P0)).

In non-limitative embodiments, the method MTH may be used for printing an image I on any printing support Sp such as:
- any official documents comprising an image I, such as in non-limitative examples ID card, passport card, driving license cards etc..
- any goods packaging;
- an electronic device D.

In a non-limitative embodiment, the electronic device D is a smart card. In a non-limitative example, said smart card is a banking smart card.

The product security levels in the banking domain are fulfilled thanks to the method described as it requires having a specific tag associated to the laser printing machine LM. In another non-limitative embodiment, said smart card is a SIM ("Subscriber Identity Module") card.

In non-limitative embodiment, an image I comprises:
- at least one photo Pic; and/or
- at least one logo; and/or
- at least one text Txt.

The steps of the method are described in more details in the following. In the non-limitative embodiment illustrated:
- the image Mx which is printed comprises a plurality of sub-matrix SMx which are a predetermined pattern P and a plurality of sub-matrix SMx which are not a predetermined pattern P;
- the predetermined pattern P comprises at least one pixel Pi which is not shifted according to an offset Off.

Hence, **in a first step 1**), the laser printing machine LM prints the predetermined pattern P.

Fig. 2 illustrated an image I comprising a photo Pic of a person. Said image I is a matrix Mx which comprises a plurality of pixels Pi.

For printing such an image I comprising said photo Pic, the laser printing machine LM usually prints the pixels Pi of said matrix Mx according to targeted printing positions P0 for each pixel Pi and according to a corresponding color for each pixel Pi. A color is scaled from 0 to 255 in a non-limitative example.

In order to print a predetermined pattern P in said image I, as illustrated in Fig. 2, the matrix Mx is divided in a plurality of N sub-matrix SMx, with N>=1.

In the non-limitative example illustrated in Fig. 2, the matrix Mx is divided in 99 sub-matrix SMx.

In a non-limitative embodiment, a sub-matrix SMx comprises a plurality of pixels Pi. In a non-limitative example illustrated in Fig. 2, a sub-matrix SMx comprises 16 pixels Pi.

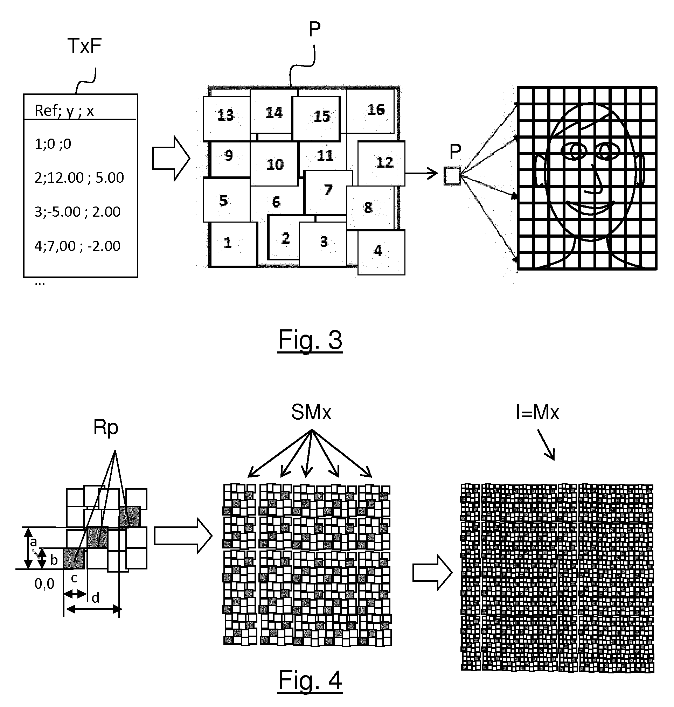

A predetermined pattern P is illustrated in a non-limitative embodiment in Fig. 3.

In a non-limitative embodiment, said predetermined pattern P is printed a plurality of times as illustrated in Fig. 3. It permits to easier recover said predetermined pattern P in said image I, while scanning said image I with a scanner for example.

Said predetermined pattern P is predetermined as it is defined before the printing of said image I. It is set by a person who is in charge of the compliance with the security level standard of the relevant domain for the production of the image I. It is relative to the laser printing machine LM. It means that it is specific to said laser printing machine LM as it is defined specifically for the laser printing machine LM.

As will be described hereinafter, said predetermined pattern P is unique to said laser printing machine LM.

Said predetermined pattern P comprises at least one pixel Pi which is shifted from its targeted position P0 according to an offset Off.

In a non-limitative embodiment, said predetermined pattern P may also comprise at least one pixel Pi which is not shifted.

Hence, the printing of the predetermined pattern P comprises:
- the printing of at least one pixel Pi which is shifted from its targeted position P0 according to an offset Off; and
- in a non-limitative embodiment, the printing of at least one pixel Pi according to its targeted position P0.

As illustrated in the non-limitative example of Fig. 3, said predetermined pattern P comprises a plurality of pixels Pi which are shifted from their targeted position P0 according to the same offset Off or different offsets Off.

The setting of a predetermined pattern P is likely different from a laser printing machine LM to another printing machine LM, as there are a huge quantity of combinations between the different pixels Pi chosen which will be shifted and the different value of the associated offsets.

So there it is very unlikely that two different persons will chose the exact same predetermined pattern for two different laser printing machine that they have to set up. If it is the same person who has to set up two different laser printing machines, as she is aware that according to the security levels of the relevant domain, there must be a different signature for each laser printing machine, she will define two different predetermined patterns.

Therefore, the predetermined pattern P is unique and relative to a laser printing machine LM.

In a non-limitative embodiment, an offset Off is defined according to x, y coordinates (horizontal and vertical).

In a non-limitative example, an offset Off is defined in microns.

Hence, in a non-limitative embodiment, said method MTH further comprises the use of a text file TxF to set the offset(s) Off for the pixel(s) Pi of said predetermined pattern P to be shifted, said text file TxF comprising a reference Ref of said pixel(s) Pi to be shifted and the associated offset Off according to the vertical y and the horizontal x coordinates.

Fig. 3 illustrates a non-limitative example of said text file TxF and said shifting. For example:
- the first pixel referenced 1 is not shifted as the Offset is 0,0;
- the second pixel referenced 2 is shifted in vertical from 12 microns and in horizontal from 5 microns;
- the third pixel referenced 3 is shifted in vertical from 5 microns and in horizontal from 2 microns;
- the fourth pixel referenced 4 is shifted in vertical from 7 microns and in horizontal from 2 microns etc.

As illustrated in Fig. 3, said pixels Pi are misaligned compared to their targeted printing position P0 they should have.

It is to be noted that an offset Off is determined so as to not alter the global color of said image I (that is to say the global quality of visual perception of the entire image) so that a person which looks at the image I may not perceive any change in the global color of the image I.

Hence, the pixels Pi which are misaligned may overlap other pixels Pi, but the perception of the image I by a person is not changed as the offset are small compared to the resolution Rs0 of the image I.

The resolution of the image I is the printing resolution of the image I. It is therefore an input parameter for the laser printing machine LM.

In a non-limitative embodiment, an offset Off is determined according to the resolution Rs0 of the image I. Hence, the change of the position of a pixel Pi is function of the size of a pixel Pi so that the pixel Pi is not moved too far from its targeted position P0 in order not to alter the image I. In a non-limitative embodiment, the offset Off will be from 5% to 10% of the size of said pixel Pi.

In a non-limitative example, if the resolution Rs0 is of 600dpi (dot per inch), which means that the size of a pixel is of 2,54centimeters/600=42microns, and the offset Off may be between 2 microns to 5 microns.

In a non-limitative embodiment, the printing of the pixels Pi within a sub-matrix SMx, either the sub-matrix SMx comprising the shifted pixel(s) or the other sub-matrix SMx, is performed according to a predetermined order (also called predetermined print order).

In a first non limitative variant, the predetermined print order is a linear trajectory. It means that the pixel Pi referenced 1 is printed first, the pixel Pi referenced 2 is printed secondly, the pixel Pi referenced 3 is printed thirdly etc.

In a second non limitative variant, a predetermined print order may be a printing firstly of the pixels which reference is even, and secondly the pixels which reference is odd.

In a third non limitative variant, a predetermined print order may be:
- firstly printing all the pixels Pi referenced 1 of all sub-matrix SMx consecutively;
- secondly printing all the pixels referenced 2 consecutively etc.

Hence different printing trajectories may be defined according to the chosen predetermined print order.

It is to be noted that a laser printing machine LM which performed the printing of the image I comprises one galvanometric head GH. Said galvanometric head GH comprises its own intrinsic mis-registration, which is dependant of the printing order of the pixels Pi. Hence, said predetermined printing order is a parameter which is also relevant to give a predetermined pattern P which is unique for a laser printing machine LM.

It is to be noted that a galvanometric head GH comprises a slew rate which may be different from the slew rate of another galvanometric head of another printing machine or equal to. In both cases, the printing trajectories of the two galvanometric heads are different, which also leads to a different mis-registration.

In a non-limitative embodiment, the method MTH further comprises the generation by means of said laser machine LM of at least one reference point Rp in said predetermined pattern P (step illustrated in dotted line Fig. 1 GEN(LM, Rp, P)).

It permits to locate a the predetermined pattern P. Thanks to said reference point Rp, a scanner or a lens is able to locate the sub-matrix SMx corresponding to the predetermined pattern P in said image I and then is able to read said predetermined pattern P. Said reference point Rp is therefore visible by a scanner or a lens.

It is to be noted that in the same manner as for the predetermined pattern P, this reference point Rp is also predetermined by the person who is in charge of the setting of the laser printing machine LM.

In a non-limitative embodiment, the laser machine LM generates a plurality of reference points Rp in said predetermined pattern P. The more there are some reference points Rp the easier it is to detect a predetermined pattern P.

In a non-limitative embodiment, said reference point Rp is non-printed. It means that it is a point on the printing support Sp itself. Said point comprises a color which is the color of the printing support Sp at a pixel position of said image I, which should has been printed.

If all the sub-matrix SMx comprises such a reference point Rp, when the reference point Rp are non-printed, it permits to gain printing time.

Fig. 4 illustrates a selection of reference points Rp which are non-printed in a non-limitative example. In the non-limitative example illustrated, there are three reference points Rp in a sub-matrix SMx of size 16 pixels. Their positions are respectively defined by the references (0,0), (b,c) and (a,d).

In a non-limitative embodiment, if all the sub-matrix SMxN comprise a predetermined pattern P, all the sub-matrix SMxN comprise such reference points Rp as illustrated in Fig. 4.

When said predetermined pattern P is printed, **in a second step 2**), the laser printing machine LM prints the other sub-matrix SMx of said matrix Mx according to targeted printing positions P0 of said other sub-matrix' pixels Pi, that is to say the sub-matrix SMx which is (are) not a predetermined pattern P.

In a non-limitative embodiment, the printing of the plurality of sub-matrix SMxN (the predetermined pattern(s) P and the other one(s)) is performed according to a predetermined order. In a non-limitative example, it is performed according to an ascending order of the sub-matrix SMxN, starting with the first sub-matrix SMx on the upper left corner of the matrix Mx and finishing with the last sub-matrix SMx on the lower right corner of the matrix Mx. Said predetermined order of said printing is also a parameter which gives the laser printing machine LM a signature which is unique, as the own intrinsic mis-registration of the galvanometric head of said laser printing machine LM is also dependant from such predetermined sub-matrix print order.

It is to be noted that these two steps may be performed in any order. Hence the step of printing the other sub-matrix SMxN of said matrix Mx may be performed before the step of printing the predetermined pattern(s) P of said matrix Mx.

Hence, thanks to the predetermined pattern P which is specific to said laser printing machine LM, the method MTH permits to add a security feature to mark said image I, so that the origin of production of said image I may be traced, and also so that said image I may not be copied precisely. Especially, when said image I comprises a picture Pic such as a photo, if said picture Pic is illegally modified or copied by another laser printing machine, upon verification with a scanner for example, one will be able to detect that the image has been illegally modified or said copy is a fake one.

Hence, a signature, also called tag, is given to a laser printing machine LM, said signature being unique as it is different from a laser printing machine to another laser printing machine, thanks to:
- the different settings of the offset(s) Off from one laser printing machine to another laser printing machine;
- the galvanometric head GH which intrinsic characteristic differs from one laser printing machine to another laser printing machine;
- the printing pixels order within the predetermined pattern P;
- the printing sub-matrix order within the matrix Mx.

When the image I also comprises a text Tx1, it may be also interesting to avoid a person to illegally modify said text Tx1 in said image I.

In the non-limitative example of an ID card or a passport, one must avoid a person to tamper with the text relative to the identity of the person (first name, last name, age, date of birth etc.).

For this purpose, the method MTH further proposes a second security feature which permits to encode said text Tx1 which is not encoded, and to include the encoded text Tx1' also in the printed image I.

Hence, **in a third step 3**) illustrated in dotted lines Fig. 1 PRT(LM, SMx, Sp, C(Pi, Cox))), the method MTH further comprises the printing of an encoded character C in at least one sub-matrix SMx, said encoded character C being formed by a predetermined number of pixels Pi with a same predetermined color Cox in said at least one sub-matrix SMx.

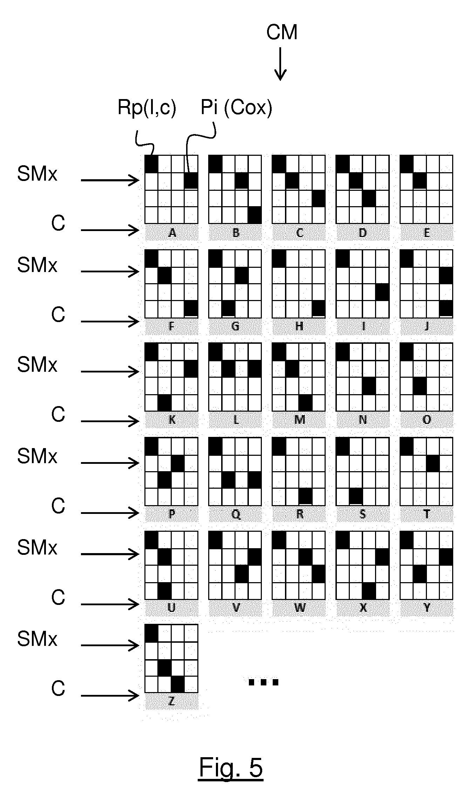

Fig. 5 illustrates a coding map CM comprising the coding of each of the characters of the alphabet from a to z.

In a non-limitative embodiment, the color Cox of the pixels Pi of an encoded character is equal to 255, which corresponds to the white color.

In a non-limitative embodiment, the color Cox of the pixels Pi of an encoded character C is equal to the color of the printing support Sp and is therefore non-printed. It permits to detect an encoded character more easily. It also permits to decrease the printing time.

In a non-limitative embodiment, the color Cox of the pixels Pi of an encoded character C is equal to the color of the background of the image I.

Hence, the color Cox of the pixels Pi of an encoded character C is chosen according to the global color of the image I, so that said color Cox is detectable (that is to say visible) by a scanner or a lens.

It is to be noted that it is better when the encoding of a character C is not too visible by naked eyes, and therefore when an encoded text Tx1' corresponding to a non-encoded text Tx1 is not too visible by naked eyes. Hence, an encoded text Tx1' is less detectable by naked eyes.

Of course, the encoding must be visible by a scanner or a lens which will decode the character(s) C. For this purpose, in a non-limitative embodiment illustrated, an encoded character have 4 pixels height, which is lower than a non-encoded character which requests a minimum of 5 pixels height to be readable by naked eyes. Therefore, a sub-matrix SMx which comprises an encoded character C is composed of 4x4 pixels.

In order to detect an encoded character C within a sub-matrix SMx, in a non-limitative embodiment, the pixels Pi forming the encoded character C are positioned in said at least one sub-matrix SMx compared to the position of one reference point Rp.

Hence, after detecting a sub-matrix SMx thanks to a reference point Rp, a scanner or a lens is able to look for an encoded character C regarding the position of said reference point Rp and to decode said character C.

In the non-limitative example illustrated in Fig. 5, the reference point Rp is place at the position 1, c = 0,0, with 1 representing a line and c representing a column in the sub-matrix SMx. It is therefore situated in the upper left corner of said sub-matrix SMx.

In this example, the encoded character a is formed by a pixel Pi which is placed at the position 2,4 compared to the position 0,0; the encoded character b is formed by two pixels Pi respectively at a position 2,3 and 3,4 compared to the position 0,0 etc.

In a non-limitative embodiment, the characters C which are likely to be used the most are encoded with few pixels Pi. It permits to identify them more easily in the image I.

They are encoded with less pixels Pi than the characters C which are likely to be used the less in a text. It permits to gain some printing time.

For example the vowels a, e, i and o are often used in a text. Therefore they are encoded with only one pixel, whereas the characters z and w are encoded with two pixels Pi.

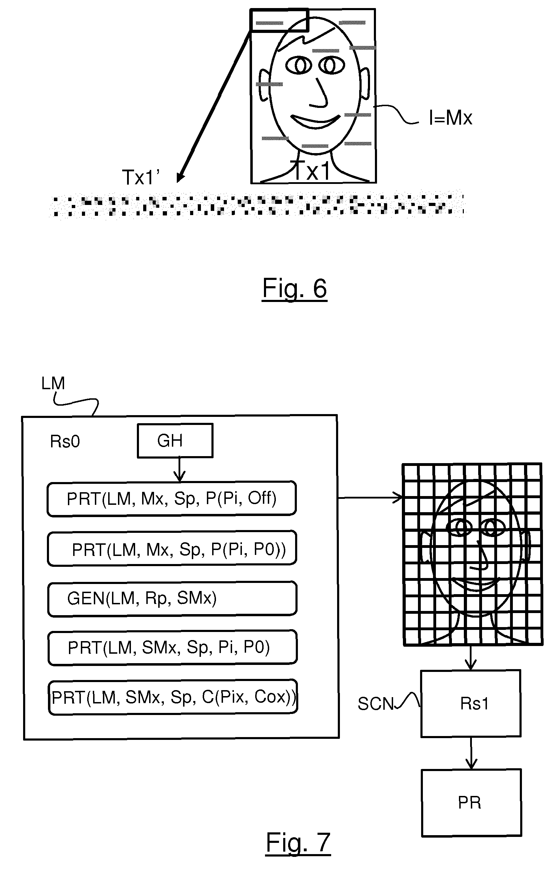

As illustrated in Fig. 6, in order to encode a whole text Tx1 which comprises a plurality of characters C, a plurality of encoded characters C is printed, one per sub-matrix SMx, said plurality of encoded characters C forming an encoded text Tx1' corresponding to a printed non-encoded text Tx1 in said image I.

Hence an encoded text Tx1' comprises a plurality of encoded characters C and extends along a plurality of corresponding sub-matrix SMx as illustrated by a rectangle illustrated in Fig. 6. In a non-limitative embodiment, the encoded text Tx1' corresponding to the non-encoded text Tx1 is printed several times so that it is repeated many times in said image I, as illustrated by the plurality of rectangles in Fig. 6. It permits to easier recover said encoded text Tx1'.

Hence, the encoding of a text Tx1 enclosed in said image I gives a complementary security feature to the predetermined pattern P to verify if the image I has been altered or not. The encoded text Tx1' is read by a scanner or a lens and decoded and then compared to the original text Tx1 in the image I.

Therefore it permits to verify some personalized data such as the identity of a person which are included in the printed image I.

Hence a person is not able anymore to falsify the data any printing support Sp such as on an official document or on a smart card for example without anyone's knowledge.

It is to be noted that if a photo within the image I is modified, with this second feature, one may also detect the modification of said photo, even if the text Tx1 is not altered. Indeed, the several encoded texts Tx1' which are superposed with the photo will be modified with said photo, and the comparison with the original text Tx1 will make appear the alteration.

Hence, it is to be noted that an encoded text Tx1' may be superposed to a predetermined pattern P. In this case, for the decoding of said encoded text Tx1', when the scanner or the lens performs the following steps:
- it detect a reference point Rp;
- it decodes the predetermined pattern P;
- it performs the inverse transformation regarding the shifting of the different pixels Pi which have been shifted according to an offset Off;
- it decodes the text Tx1' according to the coding map CM.

The method MTH which has been described is carried out by a printing machine LM illustrated in Fig. 7.

Said printing machine LM is adapted to print an image I, said image I forming a matrix Mx of pixels pi, and comprises a galvanometric head GH adapted to print at least one predetermined pattern P, said predetermined pattern P forming a sub-matrix SMx of said matrix Mx and comprising at least one pixel Pi which is shifted from a targeted printing position P0 according to an offset Off (function illustrated in Fig. 7 PRT(LM, Mx, Sp, P(Pi, Off)).

In a non-limitative embodiment, the printing machine LM is a laser printing machine.

In a non-limitative embodiment, the galvanometric head GH is further adapted to:
- print at least one pixel Pi of said predetermined pattern P according to a targeted printing position P0 (function illustrated in Fig. 7 PRT(LM, Mx, Sp, P(Pi, P0));
- print the other sub-matrix SMx of said matrix Mx according to targeted printing positions P0 of said other sub-matrix' pixels Pi (function illustrated in Fig. 7 PRT(LM, SMx, Sp, Pi, P0)).

In non-limitative embodiments, the galvanometric head GH is further adapted to:
- generate at least one reference point Rp in said at least one predetermined pattern P (function illustrated in Fig. 7 GEN(LM, Rp, P)).
- print an encoded character C in at least one sub-matrix SMx of said matrix Mx, said encoded character C being formed by at least one predetermined pixel Pi with a predetermined color Cox (function illustrated in Fig. 7 PRT(LM, SMx, Sp, C(Pi, Cox))).

In a non-limitative embodiment, in order to read a predetermined pattern P and an encoded character(s) C, a scanner SCN (illustrated in Fig. 7) may be used.

In another non-limitative embodiment, a lens (not illustrated) may be used.

Such a scanner SCN or lens has an image resolution Rs1 which is bigger than the one of a pixel size so that it may read the predetermined pattern P and the encoded character(s) C.

In a non-limitative variant of embodiment, the image resolution Rs1 of the scanner SCN or lens is at least twice time image resolution Rs0.

In a non limitative example, when the image resolution Rs0 is equal to 600dpi, the scanner or lens resolution Rs1 is equal to 2400dpi.

The image read by the scanner SCN or the lens is then analyzed by an execution platform such as a unit processor PR (illustrated in Fig. 7).

The unit processor PR has the following input parameters:
- the size of a sub-matrix SMx;
- the coding of a reference point Rp;
- the non-encoded text Tx1 in the image I;
- the coding map CM of the characters C;
- the position(s) of the encoded text Tx1' in the image I.

The unit processor PR is adapted to detect the different offset Off.

In a non-limitative embodiment, it also has as an input parameter the different offsets Off of the pixels Pi forming the predetermined pattern P. In this manner, the unit processor PR may verify the origin of the image production.

It is to be understood that the present invention is not limited to the aforementioned embodiments and variations and modifications may be made without departing from the scope of the invention.

Hence, in another non-limitative embodiment, an offset Off may be defined according to only one coordinate (x or y), or polar coordinates.

Hence, in another non-limitative embodiment, the coding map CM defines the coding of each of the characters of the alphabet from a to z including the characters which may have some accents (depending on the language for example) and/or further comprises the coding of a plurality of numbers, in a non-limitative example from 0 to 9 etc.

Hence, in another non-limitative embodiment, a sub-matrix SMx is composed of 3x3 pixels.

Hence, some embodiments of the invention may comprise one or a plurality of the following advantages:
- with the predetermined pattern P, it gives a specific identification of a laser printing machine so that the production of the supports (smart card, packaging, documents etc.) comprising an image I is traced, and at the same time it gives a mean to check if a photo in said image has not been illegally copied or altered;
- contrary to a prior art which only uses a database, with the predetermined pattern P, it guarantees that a picture Pic in the image I is an original picture;
- the different offsets Off contributes to the uniqueness of the of the predetermined pattern P;
- the own mis-registration of the galvanometric head of a laser printing machine contributes to the uniqueness of the predetermined pattern P;
- the encoding character(s) adds a supplementary security feature to avoid a modification of a text within the image I.

## Claims

1. Method (MTH) for printing an image (I), said image (I) forming a matrix (Mx) of pixels (pi), wherein said method (MTH) comprises:
- the printing by means of a printing machine (LM) of at least one predetermined pattern (P), said predetermined pattern (P) forming a sub-matrix (SMx) of said matrix (Mx) and comprising at least one pixel (Pi) which is shifted from a targeted printing position (P0) according to an offset (Off).

2. Method (MTH) according to claim 1, wherein the predetermined pattern (P) comprises at least one pixel (Pi) which is printed according to a targeted printing position (P0).

3. Method (MTH) according to 1 or claim 2, wherein said method (MTH) further comprises:
- the printing by means of said printing machine (LM) of the other sub-matrix (SMx) of said matrix (Mx) according to targeted printing positions (P0) of said other sub-matrix' pixels (Pi).

4. Method (MTH) according to anyone of the previous claims 1 to 3, wherein said predetermined pattern (P) is specific to said printing machine (LM).

5. Method (MTH) according to anyone of the previous claims 1 to 4, wherein the offset (Off) is determined according to an image resolution (Rs).

6. Method (MTH) according to anyone of the previous claims 1 to 5, wherein said method (MTH) comprises the printing of a plurality of said predetermined pattern (P) in said matrix (Mx).

7. Method (MTH) according to anyone of the previous claims 1 to 6, wherein the predetermined pattern (P) comprises a plurality of pixels (Pi) which are shifted according to a same offset (Off) or different offsets (Off).

8. Method (MTH) according to the previous claim 7, wherein the printing of said plurality of pixels (Pi) is performed according to a predetermined order.

9. Method (MTH) according to anyone of the previous claims 1 to 8, wherein said method (MTH) further comprises the generation by means of said machine (LM) of at least one reference point (Rp) in said at least one predetermined pattern (P).

10. Method (MTH) according to the previous claim 9, wherein said reference point (Rp) is non-printed.

11. Method (MTH) according to anyone of the previous claims 1 to 10, wherein said method (MTH) further comprises the printing of an encoded character (C) in at least one sub-matrix (SMx) of said matrix (Mx), said encoded character (C) being formed by at least one predetermined pixel (Pi) with a predetermined color (Cox).

12. Method (MTH) according to the previous claim 11, wherein a plurality of encoded characters (C) is printed, one per sub-matrix (SMx), said plurality of encoded characters (C) forming a printed encoded text (Tx1') corresponding to a printed non-encoded text (Tx1) in said image (I).

13. Method (MTH) according to anyone of the previous claims 1 to 12, wherein said printing machine is a laser printing machine (LM).

14. Method (MTH) according to anyone of the previous claims 1 to 13, wherein the printing of said image (I) is performed on an electronic device (D) which is a smart card.

15. Printing machine (LM) for printing an image (I), said image (I) forming a matrix (Mx) of pixels (Pi), wherein said printing machine (LM) comprises a galvanometric-head (GH) adapted to print at least one predetermined pattern (P), said predetermined pattern (P) forming a sub-matrix (SMx) of said matrix (Mx) and comprising at least one pixel (Pi) which is shifted from a targeted printing position (P0) according to an offset (Off).
